# DEMANDE DE BREVET EUROPEEN

(11) **EP 1 247 829 A1**
(43) Date de publication de la demande: **09.10.2002**
(21) Numéro de dépôt: 01201265.4
(22) Date de dépôt: 06.04.2001
(51) Int. Cl.: C08G 63/08, C08G 63/78, C08G 83/00, C08K 9/04, C01B 33/44

(54) **Méthode de préparation de polyester nanocomposite**

(71) Demandeur: University of Liege, 4020 Liège (BE); Université de Mons-Hainaut, 7000 Mons (BE)
(72) Inventeur: Jerome, Prof Robert, Univ. de Liège, 4000 Liège (BE); Calberg, Ir Cedric, Université de Liège, 4000 Liège (BE); Stassin, M. Fabrice, Université de Liége, 4000 Liège (BE); Halleux, M. Olivier, Université de Liège, 4000 Liège (BE); Dubois, Prof. Philippe, Université de Mons Hainaut, 7000 Mons (BE); Pantoustier, Dr. Nadège, Université Mons Hainaut, 7000 Mons (BE); Alexandre, M. Michael, Université Mons Hainaut, 7000 Mons (BE); Lepoittevin, Dr. Bénédicte, 7000 Mons (BE)

(57) **Abrégé**

L'invention concerne une méthode de préparation de polyester aliphatique nanocomposite comprenant un mélange d'une nanocharge dans au moins un monomère susceptible de former un polyester aliphatique et une polymérisation intercalative du mélange obtenu en présence d'un fluide supercritique.

## Description

L'invention concerne une méthode de préparation de polyester aliphatique nanocomposite.
Les polyesters aliphatiques sont connus et utilisés pour leur biodégradabilité et biocompatibilité. Cependant leurs propriétés thermo-mécaniques sont insuffisantes pour leur utilisation dans certaines applications. Ils souffrent d'une tenue thermique limitée, d'une faible rigidité, de propriétés barrières insuffisantes et d'un comportement au feu restreint.
Il est connu qu'une dispersion de nanocharges dans un polymère peut améliorer ses propriétés thermo-mécaniques mais, jusqu'à présent, pour les polyesters aliphatiques, aucune amélioration ne s'est montrée satisfaisante.

Les polyesters nanocomposites sont en effet connus de l'état de la technique.
N.Ogata et al dans J. Polym. Sci. Part B : Polym. Phys. 35(1997) décrivent une méthode de préparation dans du chloroforme, de poly(L-lactide) chargé par de la montmorillonite préalablement organo-modifiée en surface par des ions diastéaryldiméthylammonium. Néanmoins la montmorillonite organo-modifiée n'est pas bien dispersée dans le poly(L-lactide). En effet, la charge ne présente pas dans le composite final une structure non agrégée, c'est-à-dire avec des feuillets silicates non délaminés/exfoliés. Cette structure seule est à même de garantir de bonnes propriétés barrières.

G.Jimenez, N.Ogata et al dans J. Appl. Polym. Sci.64 (1997) 2211-2220 décrivent la préparation dans un solvant organique (également le chloroforme) de poly(ε-caprolactone) chargée de montmorillonite organo-modifiée par des ions diastéaryldiméthylammonium. A nouveau, la dispersion de la charge au sein du composite final est mauvaise. De plus cette méthode de préparation de polymères nanocomposites est réalisée en solvants organiques qui sont de plus en plus sujet à caution par des réglementations relatives à la protection de l'environnement.

En 1995, Messersmith décrit dans J. Polym. Sci. Part A : Polym. Chem. 33, 1047-1057 une méthode de préparation de poly(ε-caprolactone) chargée de montmorillonite organo-modifiée par des acides 12-aminododécanoïques à partir d'une polymérisation en absence de solvant. La méthode de préparation nécessite une étape préalable de transfert d'ions entre la montmorillonite et l'aminoacide avant la polymérisation in-situ du polyester. La polymérisation est amorcée sans catalyseur, suite à une élévation de température à 170°C. Cette méthode de préparation présente plusieurs problèmes. La polymérisation est longue, de l'ordre de 48 heures car il faut attendre notamment que la charge gonfle dans l'ε-caprolactone). De plus, les masses moléculaires des poly(ε-caprolactone) obtenues sont faibles (Mn inférieure à 10.000). En outre, si le remplacement du solvant par un monomère améliore l'aspect environnemental de la méthode, le composite final comprend des molécules de monomère n'ayant pas réagi et manque donc de pureté. Ces molécules ne peuvent être éliminées que par un traitement spécifique ultérieur.
Il faut noter encore que la poly(ε-caprolactone) nanocomposite ainsi obtenue présente par rapport à la poly(ε-caprolactone) pure une diminution importante de perméabilité à l'eau avec une dispersion de seulement 4.8% en poids de nanocharges.
Il est également connu de l'état de la technique que des procédés d'extraction en CO₂ supercritique peuvent être utilisés pour obtenir des produits de plus grande pureté. Ces procédés ont été utilisés, par exemple dans US 5,073,267, pour extraire des composés volatils ou pour purifier les polymères de leurs résidus monomères comme dans US 4,902,780. Néanmoins ces procédés d'extraction s'effectuent après l'étape de polymérisation et nécessitent de ce fait une étape supplémentaire de filtration du produit final.
Or des polyesters de grande pureté sont recherchés, par exemple, pour des applications médicales et biomédicales. En effet, des résidus de réaction tels
que monomère, catalyseur, amorceur sont à considérer comme hautement toxiques pour de telles applications et doivent dès lors être éliminés.

La présente invention a pour but d'améliorer la méthode de préparation des polyesters aliphatiques nanocomposites pour l'obtention d'un nanocomposite de haute pureté, doté de propriétés thermo-mécaniques améliorées, tout en conservant ses propriétés remarquables de biodégradabilité et de biocompatibilité.

L'invention concerne une méthode de préparation de polyester aliphatique nanocomposite comprenant un mélange d'une nanocharge dans au moins un monomère susceptible de former un polyester aliphatique et une polymérisation intercalative du mélange obtenu en présence de fluide supercritique.

Cette méthode permet d'obtenir dans des temps relativement courts des polyesters nanocomposites d'un niveau de pureté plus élevé que ceux obtenus dans les solvants organiques volatils et présentant des propriétés physico-chimiques supérieures à celles obtenues par d'autres méthodes. Un autre avantage de l'invention est sa capacité de produire des polyesters composites à des taux de nanocharges nettement supérieurs à 10%. L'utilisation d'un fluide supercritique en tant que solvant du milieu réactionnel est également une solution de choix au problème de pollution de l'environnement qu'occasionnent les solvants organiques

La polymérisation intercalative des polymères nanocomposites est une synthèse confinée à l'intérieur d'espaces de dimension moléculaire. La polymérisation peut être amorcée soit thermiquement soit catalytiquement après adsorption d'un monomère à l'intérieur d'un composé hôte pour donner un composite présentant une structure plus ou moins exfoliée dont dépendront les propriétés physico-chimiques du nanocomposite.

La méthode de préparation de polyesters aliphatiques
nanocomposites selon l'invention est conduite dans un réacteur haute pression ayant préalablement été conditionné sous vide ou sous gaz inerte, comme le requiert la polymérisation par ouverture de cycle des esters aliphatiques. Des quantités désirées de nanocharges et de monomère sont alors introduites dans le réacteur sous flux de gaz inerte, par exemple de l'azote ou du CO₂, à une température qui est généralement la température ambiante. Dans le cas d'une polymérisation catalytique, une solution d'amorceur est transférée de la même manière. L'ordre d'introduction monomère-nanocharge-amorceur est aléatoire
Si l'amorceur est en solution dans un solvant, celui-ci peut être évaporé.
Le réacteur est ensuite rempli de fluide supercritique et chauffé jusqu'à température de polymérisation. On ajuste pression et agitation respectivement entre 50 et 500 bars et entre 0 et 2000rpm .
Lorsque la polymérisation est terminée, le réacteur est classiquement refroidi à température ambiante et la pression est relachée lentement. Le polyester aliphatique nanocomposite obtenu est récupéré généralement sous forme de poudre dans le réacteur.

Les monomères utilisés dans la présente invention sont des lactides, des lactones par exemple de l'ε-caprolactone), des dilactones, du glycolide ou leurs mélanges.

En particulier la méthode de préparation du polyester aliphatique nanocomposite est caractérisée en ce que le monomère est une lactone, plus particulièrement l'ε-caprolactone)
Selon une autre variante préférée, le monomère est un lactide.

Les fluides supercritiques utilisés dans la présente invention sont par exemple du CO₂, du NO₂, des alkanes à bas poids molaire tel du n-butane, du propane, de l'éthane, ou leurs mélanges.
On utilise de préférence le CO₂ supercritique. Ce gaz ne présente qu'une très faible toxicité. Il est naturellement abondant et des ressources importantes et localisées existent qui résultent d'activités humaines (rejets de centrale thermique par exemple). Le CO₂ supercritique est bon marché, aisé à manipuler, son pouvoir explosif ou combustible est nul.

Dans la méthode de préparation selon l'invention, le fluide supercritique peut être utilisé seul ou en présence d'un co-solvant, par exemple un solvant
organique présentant une certaine polarité. Le co-solvant est de préférence en concentration minoritaire dans le milieu réactionnel. Lorsque le fluide supercritique est du CO₂, un pourcentage inférieur à 5% en volume d'un solvant organique volatil et de polarité plus élevée peut être ajouté pour augmenter son pouvoir solvant. On choisira par exemple l'acétone.

Les nanocharges utilisées dans la présente invention sont des silicates, généralement des argiles , en particulier des phyllosilicates comme par exemple la montmorillonite, nontronite, beidelite, volkonskoite, hectorite, saponite, sauconite, magadiite, medmontite, fluorohectorite, vermiculite, kaolinite.
Les argiles, en particulier les phyllosilicates qui ont une structure en feuillets, contiennent par exemple entre les feuillets des cations alcalin tel que K+ et Na+ ou alcalino terreux ou encore des cations organiques tels que des ions alkylammonium ou des alkylsulfonium obtenus par réaction d'échanges ioniques.
Les nanocharges utilisées préférentiellement dans la présente invention sont organo-modifiées par des ions ions ammonium quaternaire de type N⁺R₁R₂R₃R₄, avec R₁, R₂, R₃, R₄ identiques ou différents et représentant un hydrogène, un groupe alkyle ayant de 1 à 25 atomes de carbone, un groupe phényl ou un groupe alkyl comprenant une ou plusieurs fonctions sélectionnées dans le groupe constitué d'amine, époxyde, acide, hydroxyle, thiol, ester, nitro, nitrile ou cétone.
On utilisera par exemple des nanocharges organo-modifiées par des ions diméthyldioctadécyl ammonium, des ions octadécylamine quaternisée , des ions diméthyl (2-éthylhexyl) suif hydrogéné ammonium ou par des acides aminodécanoiques .

Si on veut favoriser le greffage chimique entre des chaînes polymères et des feuillets de la nanocharge, on utilisera avantageusement une nanocharge organo-modifiée par des ions ammonium quaternaires dont un ou plusieurs groupements alkyles est porteur d'une ou plusieurs fonctions hydroxyles ou thiols. En particulier, on utilisera une nanocharge organo-modifiée par des ions bis(2-hydroxyéthyl)méthyl suif hydrogéné ammonium.

Dans une variante de la méthode de préparation selon l'invention, on additionne également une microcharge particulaire au mélange monomère-nanocharge.
Les microcharges utilisées dans la présente invention sont des additifs ou renforts thermo-mécaniques qui permettent d'améliorer les propriétés physico-chimiques des polymères nanocomposites . Ce sont par exemple des argiles de type montmorillonite non modifiée, de l'hydroxyde d'aluminium (ATH), de l'hydroxyde de magnésium (MTH), du borate de zinc (BZ), de l'amidon, ou encore un mélange de ces additifs.

Dans une autre variante de la méthode de préparation selon l'invention on additionne un surfactant pour favoriser la croissance des chaînes polymères, l'obtention de morphologies particulières (particules ou mousses par exemple) ou encore l'élimination du catalyseur par extraction supercritique. Ces surfactants se présentent généralement sous la forme de deux séquences, l'une étant soluble dans le fluide supercritique et l'autre interagissant avec les chaînes polyesters en croissance. Si le fluide supercritique est le CO₂, alors on utilisera préférentiellement un surfactant fluoré, siliconé ou encore carbonaté. Le choix de la seconde séquence dépendra bien évidemment de la nature du polymère synthétisé. Elle peut être par exemple de la même nature que celui-ci. Des informations plus précises concernant le "design" des surfactants à utiliser sont disponibles dans les articles de Steven M. Howdle (par exemple: Macromolecules 2000,33,237-239 et Macromolecules 2000,33,1996-1999), de Joseph DeSimone (Macromolecules 1997,30, 5673-5682 et Science, vol 274, 2049-2052) et Eric J. Beckman (Macromolecules 1997, 30, 745-756).

Dans la méthode de préparation de polyester aliphatique nanocomposite selon l'invention, un amorçage de la polymérisation peut être thermique ou catalytique.
Si l'amorçage de polymérisation est catalytique, la polymérisation des esters cycliques couverts par l'invention peut être induite par tous les catalyseurs connus de l'homme du métier. En particulier, on peut choisir un alcoolate métallique, dont l'atome métallique contient des orbitales p, d ou f d'énergie favorable, comme par exemple dans Mg, Ti, Zr, Fe, Zn, Al, Sn, Y, La et Hf qui sont particulièrement attractifs. De préférence, on utilisera dans la présente invention, du diméthoxydibutyle étain (Bu₂Sn(OCH₃)₂) ou de l'isopropylate d'aluminium (Al(OiPr)₃)
Selon une autre variante, on peut choisir un oxyde métallique, un chlorure métallique ou un carboxylate métallique, dont l'atome métallique contient des orbitales p, d ou f d'énergie favorable, comme par exemple dans Mg, Ti, Zr, Fe, Zn, Al, Sn, Y, La et Hf, en présence d'une espèce protique, comme un alcool, un thiol une amine ou de l'eau qui sont particulièrement attractifs. De préférence, on utilisera dans la présente invention de l'octoate d'étain (Sn[OC(O)-CH(CH₂-CH₃)-(CH₂)₃-CH₃]₂)
II est à la portée de l'homme du métier de choisir et d'optimiser les conditions expérimentales précises permettant la polymérisation des monomères couverts par l'invention . Elles sont fonction du ou des monomère(s) sélectionné(s), du catalyseur et de sa concentration, de la température de réaction, du degré de
conversion souhaité. Des exemples de conditions opératoires sont fournis à titre indicatif dans les exemples.

Lorsque la nanocharge, le monomère et les conditions de polymérisation sont choisis de manière judicieuse, tel que l'homme du métier sait le faire,
les nanocomposites obtenus selon l'invention présentent des propriétés thermo-mécaniques significativement meilleures que celles des nanocomposites préparés de manière classique en absence de solvant ou dans des solvants organiques, et plus particulièrement en terme d'effet barrière, de résistance à la traction, de résistance thermique ou de résistance au feu.
Les nanocomposites obtenus selon l'invention présentent une exfoliation complète de la nanocharge, comme démontré par analyse par diffraction de rayon X. La stabilité thermique des nanocomposites générés, comme démontré par analyses thermogravimétriques différentielles, est fortement améliorée par rapport à celle des polymères non chargés, même à taux de nanocharge très faible (inférieur à 5% en poids du composite final).
Une addition de microcharges particulaires au mélange de polymères nanocomposites améliore encore ces propriétés thermo-mécaniques .

Dans une autre variante de l'invention, les polymères nanocomposites à taux de charge largement supérieur à 10% (par exemple supérieur à 50%) et issus de la méthode de préparation selon l'invention, peuvent être utilisés comme mélanges maîtres. Ils sont alors mélangés en milieu fondu dans un malaxeur à rouleaux, une chambre de mélange ou une extrudeuse à un polymère, chargé ou non de microcharges, afin d'obtenir des nanocomposites à taux de chargement inférieur, préférentiellement de l'ordre de 5% en poids.
Le choix du polymère , chargé ou non de microcharges, dépendra de la nature du polyester constituant le nanocomposite à haut taux de nanocharge. Pour garantir de bonnes propriétés thermo-mécaniques au nanocomposite final, on choisira avantageusement deux polymères thermodynamiquement miscibles. Ainsi, dans le cas particulier d'un nanocomposite à base de poly(ε-caprolactone), il sera mélangé à de la poly(ε-caprolactone), du poly(chlorure de vinyle)(PVC), de l'acrylonitrile-butadiène-styrène (ABS) , des copolymères de styrène-acrylonitrile (SAN) ou encore à certains dérivés cellulosiques.

Ces mélanges maîtres à haut taux de nanocharges peuvent être obtenus par exemple, en arrêtant la polymérisation par dépressurisation du réacteur lorsque la conversion du monomère est faible. Dans cet exemple, les molécules de monomère n'ayant pas réagit sont éliminées par extraction supercritique.

Les polymères nanocomposites obtenus par la méthode de mélange présentent des propriétés thermo-mécaniques exceptionnelles en terme d'effet barrière, de résistance à la traction, de résistance thermique et de résistance au feu. L'addition des microcharges particulaires au mélange de polymères nanocomposites améliore encore les propriétés thermo-mécaniques précédentes.

Ces polymères nanocomposites obtenus par la méthode de préparation selon l'invention peuvent être utilisés dans de
nombreuses applications impliquant des propriétés de résistance thermique et même de résistance au feu. Ils peuvent également, de par leur pureté, être utilisés dans des applications médicales ou biomédicales.

Les exemples suivants illustrent l'invention:

### Exemple 1: Poly(ε-caprolactone)-Montmorillonite organo-modifiée par des ions bis(2-hydroxyéthyl)méthyl suif hydrogéné ammonium .

La réaction est conduite dans un réacteur haute pression en acier inoxydable, d'une capacité de 120 ml, équipé d'un manteau chauffant et d'un système d'agitation magnétique. La pression, la température et la vitesse d'agitation sont contrôlées en permanence.
Avant la polymérisation, le réacteur est idéalement conditionné avec soin. Pour se faire, le réacteur est chauffé jusqu'à une température de 65 °C, qui permet la désorption des parois du réacteur de molécules susceptibles d'interférer dans la réaction de polymérisation. Il est ensuite purgé sous flux d'azote pendant 15 min puis il est refroidi à température ambiante par réduction de la pression (typiquement 0.1 mmHg) pendant une heure. Il est ensuite purgé par de l'azote (grade N28; qualité standard; Air Liquide) pendant 15 min.
Dans un premier temps, la quantité désirée de nanocharges est introduite sous flux d'azote dans le réacteur à température ordinaire. La solution d'amorceur est transférée de la même manière à l'aide d'une seringue. Le toluène (solvant de cette solution) est ensuite évaporé par diminution de la pression au sein du réacteur. Cette étape effectuée, le monomère est additionné au mélange charge-amorceur sous flux d'azote. L'azote est éliminé du réacteur par balayage au CO₂. Le réacteur est rempli de CO₂ liquide pour atteindre la pression approximative de 140 bars puis chauffé lentement jusqu'à la température de réaction. La pression et l'agitation sont ensuite ajustées aux valeurs de 160 bars et de 1700 rpm. Après 24 heures, le réacteur est refroidi à 25°C et la pression est relachée lentement. Le polymère est ensuite récupéré sous forme d'une poudre dans le réacteur.

| Echantillon | Argile utilisée | Taux de charge | Mn théorique | Conversion | Mn mesurée |
|---|---|---|---|---|---|
| 30 | Cloisite 30B | 5 % | 10.000 | 85 % | 11000 |
| 31 | Cloisite 30B | 1 % | 15.000 | 87 % | 20200 |

### Conditions expérimentales :

La polymérisation est réalisée à 160 bars pendant 24h. La température de réaction est de 50°C. Les quantités de réactifs sont les suivantes:
Echantillon 30 :
   1g d'argile organo-modifiée par des ions bis(2-hydroxyéthyl)méthyl suif hydrogéné ammonium commercialisé par Southern Clay Product sous le nom Cloisite 30B
   20 g d'ε-caprolactone (99%, produit de Aldrich)
   2 ml d'une solution de 1.026 M en alcoolate d'étain ( Bu₂Sn(OCH₃)₂) dans du toluène. Ce produit est commercialisé par Aldrich.
Echantillon 31 :
   0.2 g de Cloisite 30B
   20 g d' ε-caprolactone, un produit de Aldrich (taux de pureté 99%)
   1.3 ml d'une solution de 1.026 M en alcoolate d'étain ( Bu₂Sn(OCH₃)₂) dans du toluène produit par Aldrich.
   La mesure de la masse moléculaire est effectuée comme suit : les échantillons sont dissous dans le toluène. Afin de rompre les liens entre l'argile et la poly(ε-caprolactone), une solution de chlorure de lithium (1% en poids dans un mélange THF/toluène 50:50, v/v) est ajoutée pour détruire la structure du gel formé. Après agitation pendant 24 heures, le gel a disparu et la solution peut être filtrée afin de séparer le précipité (argile) du filtrat (contenant la poly(ε-caprolactone). Le filtrat est ensuite précipité dans l'heptane afin de récupérer la poly(ε-caprolactone) (PCL) "libre" formée. L'estimation des masses moléculaires est réalisée ensuite par chromatographie d'exclusion stérique (GPC) dans le THF à 35°C en utilisant des standards de polystyrène [M_{PCL} = 0.259 x (M_{PS})^{1.073}].

L'analyse de diffraction des rayons X (DRX) permet de déterminer les distances réticulaires spécifiques (d) des argiles seules et au sein des composites "polymères + argiles" afin de les comparer et d'attester d'une éventuelle intercalation du polymère au sein des couches silicates de l'argile.
Les données d'analyse de diffraction des rayons X pour les mélanges 30 et 31 attestent d'une exfoliation de la nanocharge. Le signal caractéristique de la distance réticulaire entre les feuillets de la charge a totalement disparu. La dispersion de la charge au sein du composite peut donc être considérée comme excellente.

La tenue au feu de ces deux échantillons est aussi excellente. Ils brûlent lentement et se consument en produisant des cendres (sans production de goutte enflammée).

### Exemple 2: Poly(ε-caprolactone)-Montmorillonite organo-modifiée par des ions diméthyldioctadécyl ammonium

La réaction est conduite comme dans l'exemple 1, mais avec une pression de 190 bars au lieu de 160.

| Echantillon | Argile utilisée | Taux de charge | Mn théorique | Conversion | Mn |
|---|---|---|---|---|---|
| 32 | Cloisite 25A | 5 % | 15.000 | 70 % | 13100 |
| 33 | Cloisite 25A | 1 % | 10.000 | 87 % | 12800 |

### Conditions expérimentales :

La polymérisation est réalisée à 190 bars pendant 24h. La température de réaction est de 50°C.

Les quantités de réactifs sont les suivantes:
Echantillon 32 :
   1g d'argile organo-modifiée par des ions diméthyldioctadécyl ammonium commercialisée par Southern Clay Product sous le nom Cloisite 25A
   20 g d'ε-caprolactone) (99%; Aldrich)
   1.3 ml d'une solution de 1.026 M en alcoolate d'étain (Bu₂Sn(OCH₃)₂) dans du toluène (Aldrich)
Echantillon 32 :
   0.2 g de Cloisite 25A
   20 g d'ε-caprolactone
   2 ml d'une solution de 1.026 M en alcoolate d'étain ( Bu₂Sn(OCH₃)₂ ) dans du toluène (Aldrich)
   Les données d'analyse de diffraction des rayons X pour les mélanges 31 et 32 attestent d'une exfoliation et d'une intercalation de la nanocharge. Le signal caractéristique de la distance réticulaire entre les feuillets de la charge est très faible, élargi et son maximum est centré sur une distance réticulaire élevée (29.7nm). L'analyse par microscopie à balayage confirme l'exfoliation des nanocharges, avec l'observation de feuillets bien distincts. La dispersion de la charge au sein du composite peut donc être considérée comme très bonne.
   La tenue au feu de ces deux échantillons est aussi excellente. Ils brûlent lentement et se consument en produisant des cendres (sans production de goutte enflammée).

### Exemple 3: Poly(l-lactide) - Montmorillonite organo-modifiée par des ions bis(2-hydroxyéthyl)méthyl suif hydrogéné ammonium.

La réaction est conduite comme dans l'exemple 1 mais, le L-lactide est utilisé comme monomère. Pour accélérer sa dissolution dans le mélange réactionnel, la température de réaction est élevée jusqu'à 65°C. La polymérisation est réalisée à une pression de 195 bars.

| Echantillon | Argile utilisée | Taux de charge | Mn théorique | Conversion |
|---|---|---|---|---|
| 38 | Cloisite 30B | 5 % | 10.000 | 93 % |

### Conditions expérimentales :

La polymérisation est réalisée à 195 bars pendant 27h. La température de réaction est de 65°C.

Les quantités de réactifs sont les suivantes:
1g de Cloisite 30B
20 g de L-lactide commercialisé par Boehringer Ing.
2 ml d'une solution de 1.026 M en alcoolate d'étain ( Bu₂Sn(OCH₃)₂ ) dans du toluène (Aldrich).

La tenue au feu de cet échantillon acquiesce de la formation d'un nanocomposite et de la bonne dispersion de la nanocharge au sein de celui-ci.

### Exemple 4: Poly(ε-caprolactone-co- L-lactide) - Montmorillonite organo-modifiée par des ions bis(2-hydroxyéthyl)méthyl suif hydrogéné ammonium.

La réaction est conduite comme dans l'exemple 1 à l'exception que le monomère d'_-caprolactone est remplacé par un mélange de monomères d'ε-caprolactone) et de L-lactide.
Le L-lactide et l'_-caprolactone sont copolymérisés pour modifier les propriétés mécaniques du polymère résultant.

| Echantillon | Argile utilisée | Taux de charge | Mn théorique | Conversion |
|---|---|---|---|---|
| 39 | Cloisite 30B | 5 % | 10.000 | 60 % |

### Conditions expérimentales

La polymérisation est réalisée à 190 bars pendant 24h. La température de réaction est de 70°C.
Les quantités de réactifs sont les suivantes:
1g de Cloisite 30B
10 g de L-lactide, 10 ml d'_-caprolactone. Les deux monomères sont ajoutés en même temps.
2 ml d'une solution de 1.026 M en alcoolate d'étain ( Bu₂Sn(OCH₃)₂) dans du toluène.

La tenue mécanique de cet échantillon acquiesce de la formation d'un copolymère statistique amorphe. Les deux monomères copolymérisent donc bien dans ces conditions, pour former un nanocomposite, comme en témoignent les mesures en TGA et la tenue de l'échantillon une fois exposé à la flamme. La tenue au feu de l'échantillon atteste de la bonne dispersion de la nanocharge au sein du composite.

### Exemple 5: Poly(ε-caprolactone)- Montmorillonite non modifiée

La réaction est conduite comme dans l'exemple 1 à l'exception que la nanocharge est remplacée par une argile non modifiée, la cloisite Na⁺.
La pression est de 210 bars et la température de réaction de 50°C.

| Echantillon | Argile utilisée | Taux de charge | Mn théorique | Conversion | Mn mesurée | Poly-dispersité |
|---|---|---|---|---|---|---|
| 41 | Cloisite Na⁺ | 1 % | 10.000 | 94 % | 10700 | 1.6 |

### Conditions expérimentales :

La polymérisation est réalisée à 210 bars pendant 24h. La température de réaction est de 50°C.

Les quantités de réactifs sont les suivantes:
0.2g de Cloisite Na⁺ commercialisée par Southern Clay Product
20 ml d' ε-caprolactone) (99% Aldrich)
2 ml d'une solution de 1.026 M en alcoolate d'étain ( Bu₂Sn(OCH₃)₂) dans du toluène (Aldrich).

L'analyse de diffracton des rayons X de cet échantillon montre que le pic caractéristique de la distance réticulaire entre les feuillets de la charge a disparu. La dispersion de la nanocharge au sein du nanocomposite peut donc être considérée comme excellente.

### Exemple 6 Poly(ε-caprolactone)-Montmorillonite organo-modifiée par des ions diméthyldioctadécyl ammonium.

La réaction est conduite comme dans l'exemple 2, mais l'amorçage de la réaction est réalisé thermiquement.

| Echantillon | Argile utilisée | Taux de charge | Conversion | Mn mesurée |
|---|---|---|---|---|
| 42 | Cloisite 25A | 5 % | 92 % | 16100 |

### Conditions expérimentales :

La polymérisation est réalisée à 190 bars pendant 24h. Pendant la première heure de réaction, la température de réaction est de 170°C, elle est diminuée ensuite à 50°C.

Les quantités de réactifs sont les suivantes:
1g d'argile organo-modifiée par des ions diméthyldioctadécyl ammonium commercialisée par Southern Clay Product sous le nom de Cloisite 25A
20 g d'ε-caprolactone (99%; Aldrich)

### Exemple 7: mélange de Poly(ε-caprolactone) chargée et non chargée : méthode du mélange maître.

Le nanocomposite obtenu selon la méthode de préparation de l'invention et présentant un taux élevé de nanocharges est alors mélangé à de la Poly(ε-caprolactone) non chargée afin d'obtenir un nanocomposite de faible taux de charge.
Les conditions de polymérisation sont similaires à celles décrites précédemment.
Le tableau suivant donne la nature et la composition de trois 'mélanges maître' au départ de Cloisite 25A, Cloisite 30B et de Cloisite Na⁺ respectivement

**Tableau 1:**

| résultats de la polymérisation de l'ε-caprolactone) en présence de nanocharges | | | |
|---|---|---|---|
| mélange maître PCL/nanocharge | Mn¹⁾ (g/mol) | Ip | % charge²⁾ |
| PCL/Cloisite 30B | 7600 | 1.32 | 18.6 |
| PCL/Cloisite 25A | ? | ? | 15.0 |
| PCL/Cloisite Na⁺ | 8600 | 1.08 | 43.0 |

Le mélange ultérieur de ces polymères nanocomposites (masterbatches) avec la poly(ε-caprolactone) est réalisé dans un mélangeur à rouleaux à 130°C pendant 15 minutes et leurs propriétés mécaniques (test de traction) sont comparées à celles de la PCL de référence (produite par Solvay) dans le tableau 2.

**Tableau 2:**

| propriétés mécaniques de différents mélanges à base de PCL (conditions d'analyse: vitesse de traction ASTMD638 TYP5: 50mm/min, distance de jauge: 25.4 mm) | | | | |
|---|---|---|---|---|
| | % argile | contrainte à la rupture (Mpa)¹⁾ | élongation à la rupture (%)¹⁾ | module de Young (Mpa)¹⁾ |
| PCL référence | 0 | 48.1 _ 0.2 | 1374 _ 10.7 | 222.5 _ 5.7 |
| PCL + masterbatch PCL/cloisite Na⁺ | 3 | 23.7 _ 2.1 | 473.7 _ 66 | 261.3 _ 6.2 |
| PCL + masterbatch PCL/cloisite 25A | 3 | 20.9 _ 1 | 404.4 _ 39 | 264.0 _ 5.4 |

| | | | | |
|---|---|---|---|---|
| ¹⁾ chaque valeur est la moyenne de 4 à 6 éprouvettes testées en traction | | | | |

L'analyse thermogravimétrique permet d'estimer la stabilité thermique des différents mélanges obtenus. Elle est effectuée de 25°C à 625°C sous air avec une vitesse de chauffe de 20°C/min.

Le tableau suivant présente les résultats de l'analyse thermogravimétrique de deux mélanges.

**Tableau 3:**

| résultats de l'analyse thermogravimétrique de différents mélanges. | |
|---|---|
| | température après 50% de perte de poids |
| PCL référence | 387 |
| PCL + masterbatch PCL/Cloisite 30B | 411 |
| PCL + masterbatch PCL/Cloisite 25A | 402 |

Cette analyse montre bien l'effet de l'incorporation du 'mélange maître' au sein de la PCL c'est à dire une augmentation de la stabilité thermique de l'ordre de 15 à 25°C.

### Exemple 8 : mélange de Poly(ε-caprolactone) chargée avec du PVC

De façon similaire à l'exemple 7, des polyesters nanocomposites obtenus selon la méthode de préparation de l'invention et à un taux élevé de nanocharges sont ensuite mélangés avec du PVC commercial obtenu chez SOLVAY.
Le mélange est ensuite moulé sous presse à 150°C afin de préparer des éprouvettes pour les analyses mécaniques (test de traction).
La tenue au feu de ces échantillons acquiesce de la formation de nanocomposites.

### Exemple 9: Propriétés mécaniques

Le tableau 4 présente les résultats du test à la traction de quelques mélanges obtenus selon l'invention.

**Tableau 4:**

| Propriétés mécaniques de différents mélanges obtenus selon l'invention (conditions d'analyses: tests de traction, vitesse d'étirement:50mm/min., ASTMD638 TYP5, distance de jauge:25.4 mm) | | | | |
|---|---|---|---|---|
| | mélange | contrainte à la rupture (MPa) ^{b} | élongation à la rupture (%) ^{b} | Module de Young (MPa) ^{b} |
| 1 | PCL seule | 49.9 ± 0.2 | 1376.3 ± 10.7 | 210.3 ± 5.7 |
| 2 | PCL + Mont-Na⁺ | 37.2 ± 2.5 | 705.7 ± 46.4 | 243.7 ± 5.0 |
| 3 | PCL + amidon | 15.7 ± 0.5 | 550.0 ± 20.0 | 306.0 ± 10.0 |
| 4 | PCL + ATH | 18.7 ± 0.5 | 468.4 ± 20.8 | 232.1 ± 7.5 |
| 5 | PCL + BZ | 22.1 ± 0.9 | 531.2 ± 30.1 | 296.3 ± 11.0 |
| 6 | PCL + Mont-C18NH3⁺ | 31.1 ± 2.8 | 619.9 ± 64.0 | 279.0 ± 16.3 |
| 7 | PCL + Mont-C18NH3⁺ + amidon | 13.4 ± 0.3 | 314.9 ± 10.5 | 247.8 ± 17.1 |
| 8 | PCL + Mont-C18NH3⁺ + ATH | 15.0 ± 0.4 | 341.9 ± 15.9 | 245.2 ± 13.2 |
| 9 | PCL + Mont-C18NH3⁺ + BZ | 15.7 ± 1.0 | 332.7 ± 22.5 | 276.3 ± 51.0 |
| 10 | PCL + Mont-2CNC8C18 | 25.5 ± 2.9 | 507.2 ± 94.0 | 225.3 ± 11.7 |
| 11 | PCL + Mont-2CNC8C18 + amidon | 13.2 ± 0.2 | 344.8 ± 9.1 | 246.2 ± 12.8 |
| 12 | PCL + Mont- | 14.7 ± 0.1 | 350.5 ± 4.1 | 248.6 ± 17.5 |
| 13 | 2CNC8C18 + ATH PCL + Mont-2CNC8C18 + BZ | 17.8 ± 0.5 | 420.1 ± 29.0 | 328.9 ± 24.9 |

| | | | | |
|---|---|---|---|---|
| La polycaprolactone (PCL) de référence est de masse moléculaire Mn = 47.500 (M_{w}/Mₙ = 1.42). les nanocharges utilisées sont des montmorillonites organo-modifiée par des ions octadécylamine quaternisée (Mont-C18NH3⁺) ou par des ions diméthyl (2-éthylhexyl) suif hydrogéné ammonium (Mont-2CNC8C18) ^{b} chaque valeur est une moyenne de 4 à 6 éprouvettes testées en traction. | | | | |

Considérons les propriétés mécaniques des mélanges binaires obtenus (mélanges PCL + nanocharges), le tableau 4 met clairement en évidence une augmentation du module de Young (traduisant l'augmentation de la rigidité du système) par rapport à la matrice de PCL de référence.

L'addition d'une microcharge particulaire aux nanocomposites entraîne, comme attendu, une certaine perte en propriétés de contrainte à la rupture ainsi que d'élongation à la rupture avec cependant une augmentation du module de Young. Cette augmentation se note de manière plus importante lorsque la microcharge utilisée est le borate de zinc.

### Exemple 10 : Propriétés thermiques

L'analyse thermogravimétrique (TGA) permet d'estimer la stabilité thermique des différents mélanges obtenus. Elle a été effectuée de 25°C jusqu'à 600°C sous air avec une vitesse de chauffe de 20°C/min.

Le tableau 5 présente les résultats de l'analyse thermogravimétrique de quelques mélanges. De manière générale, nous pouvons observer qu'ils sont plus stables thermiquement que la poly(ε-caprolactone) seule.
Les mélanges sont composés de poly(ε-caprolactone) et de montmorillonite non modifiée (Mont-Na⁺) ou organo-modifiée par des ions diméthyl (2-éthylhexyl) suif hydrogéné ammonium (Mont-2CNC8C18) ou par des ions octadécylamine quaternisée (Mont-C18NH3⁺).

**Tableau 5:**

| Résultats de l'analyse thermogravimétrique des mélanges (conditions d'analyse: de 25°C à 600°C, vitesse de chauffe: 20°C/min., sous air) | | | | |
|---|---|---|---|---|
| | mélange | début de dégradation (°C) | [DTGA]** pics de dégradation (°C) | résidu à 575°C (%) |
| 1 | PCL* seule | 278 | 280 - 358 | - |
| 2 | PCL* + Mont-Na⁺ | 288 | 326 - 408 | 2.6 |
| 3 | PCL* + Mont-C18NH3⁺ | 278 | 347 - 408 | 3.5 |
| 4 | PCL* + Mont-2CNC8C18 | 286 | 402 | 3.3 |
| 5 | PCL* + Mont-2CNC8C18 + amidon | 281 | 316 - 414 | 3.0 |
| 6 | PCL* + Mont-C18NH3⁺ + ATH | 232 | 241 - 319 - 415 | 22.4 |

| | | | | |
|---|---|---|---|---|
| * polycaprolactone (PCL) de masse moléculaire Mₙ = 47.500 (M_{w}/Mₙ = 1.42) utilisée dans tous les mélanges. | | | | |
| ** températures au(x) maximum(a) présents sur la dérivée de la courbe TGA. | | | | |

Les différents matériaux obtenus ont été également testés à la flamme (test qualitatif d'observation). On peut observer que les mélanges ternaires à base de PCL, de nanocharges et de microcharges (mélanges des entrées 5 et 6 du tableau 5) brûlent et se consument très lentement en produisant des cendres (sans production de goutte enflammée). Leurs homologues binaires PCL + microcharges (mélange de l'entrée 2 du tableau) brûlent en produisant des gouttes enflammées sans production de cendre. Le comportement de ces mélanges est identique à celui de la polycaprolactone seule. D'un autre côté, leurs homologues binaires PCL + nanocharges (mélanges des entrées 3 et 4 du tableau 5) brûlent et se consument en produisant des cendres (sans production de gouttes enflammées) ce qui est une bonne indication de l'intercalation de la polycaprolactone au sein de la charge (obtention d'un nanocomposite). Cependant, il est à noter que ces derniers brûlent plus vite que les mélanges ternaires PCL + nanocharge + microcharges correspondants (mélanges des entrées 5 et 6 du tableau 5).

Des mesures de "Limiting Oxygen Index" (LOI) ont été effectuées afin de quantifier le comportement à la flamme des composites obtenus. Il est à signaler que cette mesure ne pose aucun problème pour la PCL seule, se caractérisant par un indice d'oxygène de 21.6%. Par contre, le test "LOI" n'a pu être réalisé sur les échantillons nanocomposites (entrées 3 et 4 du tableau 5), le temps nécessaire à l'inflammation de ces échantillons est largement supérieur au temps requis dans les conditions normées du "LOI". En d'autres termes, nous pouvons dire que la présence de ces charges (même en quantité inférieure à 5% en poids) empêche non seulement la formation de gouttes lors de la combustion mais retarde également considérablement l'inflammation de la matrice PCL. Cela signifie que l'effet barrière attendu joue un rôle très important sur l'inflammabilité des composites.

## Revendications

1. Méthode de préparation de polyester aliphatique nanocomposite comprenant un mélange d'une nanocharge dans au moins un monomère susceptible de former un polyester aliphatique et une polymérisation intercalative du mélange obtenu en présence d'un fluide supercritique.

2. Méthode de préparation selon la revendication 1 **caractérisée en ce que** le momère est une lactone.

3. Méthode de préparation selon l'une des revendication précédentes **caractérisée en ce que** le monomère est de l'ε-caprolactone.

4. Méthode de préparation selon la revendication 1 **caractérisée en ce que** le monomère est un lactide.

5. Méthode de préparation selon l'une quelconque des revendications précédentes **caractérisée en ce que** la nanocharge est de l'argile.

6. Méthode de préparation selon la revendication 5 **caractérisée en ce que** la nanocharge est organo-modifié par des ions ammonium quaternaire de type N⁺R₁R₂R₃R₄, avec R₁, R₂, R₃, R₄ identiques ou différents et représentant un hydrogène, un groupe alkyl C1-C25, un groupe phényl ou un groupe alkyl fonctionnalisé .

7. Méthode de préparation selon la revendication 6 **caractérisée en ce que** la nanocharge est organo-modifiée par des ions bis(2-hydroxyéthyl)méthyl suif hydrogéné ammonium.

8. Méthode de préparation selon l'une quelconque des revendications précédentes **caractérisée en ce que** le fluide supercritique est composé majoritairement de dioxyde de carbone.

9. Méthode de préparation selon l'une quelconque des revendications précédentes comprenant également une addition de surfactant dans le mélange.

10. Méthode de préparation selon l'une quelconque des revendications précédentes comprenant également une addition de microcharge particulaire dans le mélange.

11. Méthode de préparation selon la revendication 10 **caractérisée en ce que** la microcharge particulaire est un renfort thermo-mécanique.

12. Méthode de préparation d'un nanocomposite selon l'une quelconque des revendications précédentes **caractérisée en ce que** le nanocomposite est ultérieurement utilisé comme mélange maître.

13. Méthode de mélange entre un polyester aliphatique nanocomposite obtenu selon la revendication 12 et un polymère non chargé miscible avec le polyester aliphatique composant le nanocomposite, comprenant un mélange en milieu fondu du polymère non chargé avec le polyester nanocomposite.

14. Méthode de mélange selon la revendication 13 comprenant également une addition de microcharge particulaire lors du mélange en milieu fondu du polymère non chargé avec le polyester nanocomposite.

15. Méthode de mélange selon la revendication 14 **caractérisée en ce que** la microcharge particulaire est un renfort thermo-mécanique.
